(19) **Europäisches Patentamt**

**European Patent Office**

**Office européen des brevets**

(11) **EP 0 818 088 B1**

(12) **EUROPEAN PATENT SPECIFICATION**

(45) Date of publication and mention
of the grant of the patent:
**24.10.2001 Bulletin 2001/43**

(21) Application number: **96908236.1**

(22) Date of filing: **29.03.1996**

(51) Int Cl.$^7$: **H04B 10/18**

(86) International application number:
**PCT/GB96/00754**

(87) International publication number:
**WO 96/31024 (03.10.1996 Gazette 1996/44)**

(54) **OPTICAL PRE-AMPLIFIER**

OPTISCHER VORVERSTÄRKER

PREAMPLIFICATEUR OPTIQUE

(84) Designated Contracting States:
**CH DE ES FR GB IT LI SE**

(30) Priority: **31.03.1995 GB 9506653**
**14.06.1995 GB 9512074**

(43) Date of publication of application:
**14.01.1998 Bulletin 1998/03**

(60) Divisional application:
**01107372.3 / 1 128 583**

(73) Proprietor: **PIRELLI CAVI E SISTEMI S.p.A.**
**20126 Milano (IT)**

(72) Inventor: **LAMING, Richard, Ian**
**Southampton SO3 5QZ (GB)**

(74) Representative: **Turner, James Arthur et al**
**D. Young & Co.,**
**21 New Fetter Lane**
**London EC4A 1DA (GB)**

(56) References cited:
**EP-A- 0 607 782**

- **ELECTRONICS LETTERS, vol. 31, no. 4, 16 February 1995, STEVENAGE GB, pages 281-282, XP000513682 MASON ET AL: "Increasing the transmission distance of a directly modulated laser with a chirped fibre Bragg grating dispersion compensator"**
- **IEEE PHOTONICS TECHNOLOGY LETTERS, vol. 3, no. 8, August 1991, NEW YORK US, pages 727-729, XP000223741 GABLA ET AL: "Practical implementation of a highly sensitive receiver using an Erbium-doped fiber preamplifier"**

## Description

This invention relates to optical pre-amplifiers.

Data transmission in optical fibres is generally limited by power loss and pulse dispersion.

The advent of erbium-doped fibre amplifiers (EDFAs) has effectively removed the loss limitation for systems operating in the third optical communication window (around 1.55μm), leaving pulse dispersion as a serious limitation, especially in future proposed high-capacity, multi-wavelength optical networks.

More importantly, most installed fibre (i.e. standard, non-dispersion shifted fibre) exhibits a dispersion zero around 1.3μm and thus exhibits high ( ~ (about) 17ps/nm.km) (picoseconds per nanometre-kilometre) dispersion around 1.55μm (micrometre). Upgrading this fibre to higher bit rates involves the use of EDFAs and a shift in operating wavelength to 1.55μm where dispersion compensation becomes a necessity.

Several techniques for dispersion compensation have been demonstrated including laser pre-chirping, mid-span spectral inversion, the addition of highly-dispersive compensating fibre and chirped fibre gratings (see publication references 1 to 7 below). Chirped fibre gratings are of particular interest since they are compact, low-loss, polarisation-insensitive and offer high negative-dispersion of arbitrary and tuneable profile.

In one example, a grating, chirped by a linear temperature grating has been included in a 2.5Gbit/s direct modulated transmission system (see publication reference 4 below). In this case the grating was included directly after the transmitter since in this location it has negligible effect on the system loss budget as it is immediately followed by a power amplifier.

In other work Malo et al (see publication reference below) have employed a fixed chirped grating to compensate the dispersion of 100km of step index (SI) fibre.

In another publication Garthe et al (see publication reference 6 below) have employed a 5cm dispersion-tuneable grating to compensate 160km of SI fibre whilst Krug et al (see publication reference 7 below) have employed a 12cm chirped grating to compensate the dispersion of 270km of SI fibre. In all these experiments the grating was employed only to provide dispersion compensation.

Generally the narrow-band nature of fibre gratings is perceived as a problem and long broad band gratings are targeted; however these might not be realisable.

High data rate. long-span optical links will invariably employ optical amplification. In addition, at high data rates ( $\geq$ 10Gbit/s) an optical preamplifier is generally employed to overcome the electronic receiver noise and improve the overall receiver sensitivity.

In the case of a high gain optical preamplifier and in the absence of distortions the received signal to noise power ratio (SNPR) can be expressed as (from publication reference 8 below):

$$SNPR = \frac{(2GP)^2}{\{(4GP\mu_{eff}h\nu(\ G\text{-}1)\text{+}4[\mu_{eff}h\nu(G\text{-}1)]^2\Delta\nu]^{0.5}\ \text{+}(4[\mu_{eff}h\nu\ (\ G\text{-}1)^2\Delta\nu]^{0.5}\}^2B}$$

where G is the amplifier gain, P the peak signal power input to the amplifier, $\mu_{eff}$ the amplifier excess noise factor, h is Planck's constant, $\nu$ is the signal frequency, $\Delta\nu$ the optical band width for the amplified spontaneous emission (ASE) reaching the receiver and B the receiver electrical bandwidth. A SNPR of 144 is required for a $10^{-9}$ bit error rate (BER).

This formula shows that an improved SNPR and thus receiver sensitivity can be obtained by reducing the optical bandwidth. Since EDFAs are generally broad bandwidth (10-30nm, 1250-3800GHz (Gigahertz)) optical filtering is generally employed at the receiver pre-amplifier to reduce the ASE bandwidth. To date this has been achieved with either interference filters or Fabry-Perot filters (see publication reference 9 below).

Unfortunately it is difficult to fabricate narrow band interference filters with bandwidths less than ~ 1nm. As a result Fabry-Perot filters are preferred in most circumstances since they can be narrow band, 10-100GHz and easily tuneable.

Ideally in a conventional intensity modulated transmission system employing the non-return-to-zero (NRZ) data format it should be possible to reduce the optical bandwidth to the bit rate, i.e. for a 10Gbit/s (Gigabit per second) data channel, $\Delta\nu$ = 10GHz. However, this criterion assumes an ideal, so-called flat top filter response. Unfortunately the response of Fabry-Perot filters is Lorentzian. Numerical simulation has shown that in the case of optical preamplifiers incorporating Fabry-Perot type filters reducing the filter bandwidth below ~ 5 times the bit rate (i.e. for 10Gbit/s a 50GHz filter) although reducing the noise degrades the receiver sensitivity since its response distorts the signal (see publication reference 10 below).

In summary, previous optical links have used fibre gratings for dispersion compensation, but Fabry-Perot or interference filters for noise filtering at the receiver pre-amplifier. Fabry-Perot filters do not have a suitable flat-top filter response for this purpose, and interference filters are very difficult to fabricate with a suitably low bandwidth.

EP-A-0 607 782 discloses a semiconductor device having a chirped Bragg grating dispersion conpensator, the device being connectable into a pre-amplifier configuration.

This invention provides an optical receiver pre-amplifier for amplifying optical signals which have been transmitted via a dispersive optical transmission link, characterised by a chirped apodised Bragg grating noise filter, the dispersion of the chirped apodised Bragg grating noise filter acting against the dispersion of the optical transmission link.

The invention recognises that by installing the dispersion compensating chirped grating at the receiver pre-amplifier, a chirped dispersion compensating fibre grating can be employed to provide the additional function of a noise filter. As a result of the chirp the filter can have near flat top profile with near linear delay characteristics across the reflection band. In order that a grating with a particularly sharp noise filtering response can be used (i.e. a relatively narrow bandwidth), it is preferred that the chirped Bragg grating noise filter is a wavelength-tracking grating noise filter.

Preferably the frequency bandwidth ($\Delta v$) of the chirped Bragg grating noise filter is related to the bit rate (BR) of data transmitted via the link by the formula:

$$BR \leq \Delta v \leq 5BR$$

Preferably the grating noise filter is coupled to an amplifying stage of the pre-amplifier by an optical circulator.

This invention also provides optical communication apparatus comprising an optical signal transmitter coupled to an optical link and receiver apparatus having an optical receiver and a pre-amplifier as defined above. Preferably the optical transmitter operates at a wavelength of about 1.55$\mu$m. Preferably the link is a single mode optical fibre link.

The invention will now be described by way of example with reference to the accompanying drawings, throughout which like parts are referred to by like references, and in which:

Figure 1(a) schematically illustrates the reflection spectrum for a linear grating of 17mm length;

Figure 1(b) schematically illustrates the time delay characteristics for a linear grating of 17mm length;

Figure 2(a) is a schematic diagram of an optical communication apparatus;

Figure 2(b) schematically illustrates the output spectrum of an optical transmitter in the apparatus of Figure 2(a);

Figure 2(c) schematically illustrates a temperature gradient along a chirped Bragg grating in the apparatus of Figure 2(a);

Figures 3(a) and 3(b) schematically illustrate typical reflection spectra and time delay characteristics measured using an interferometric test rig, in this case for a temperature differential of 15°C/45mm (15 degrees centigrade over 45 millimetres);

Figure 4 schematically illustrates the measured bandwidth-dispersion characteristic for a tunable grating of the apparatus of Figure 2(a);

Figure 5 schematically illustrates a receiver penalty compared to the back-to-back sensitivity of -27dBm (decibels relative to one milliwatt) at a $10^{-11}$ BER for varying span lengths;

Figure 6 schematically illustrates a bit error rate (BER) penalty as a function of temperature differential for span lengths in the range 102.6-185.3km;

Figure 7 schematically illustrates a grating-circulator transmission spectrum;

Figure 8 schematically illustrates the BER penalty as a function of detuning the grating centre wavelength via temperature;

Figure 9(a) is a schematic diagram of a preamplifier incorporating a chirped grating filter; and

Figure 9(b) is a schematic diagram of a preamplifier directly followed by a chirped grating filter.

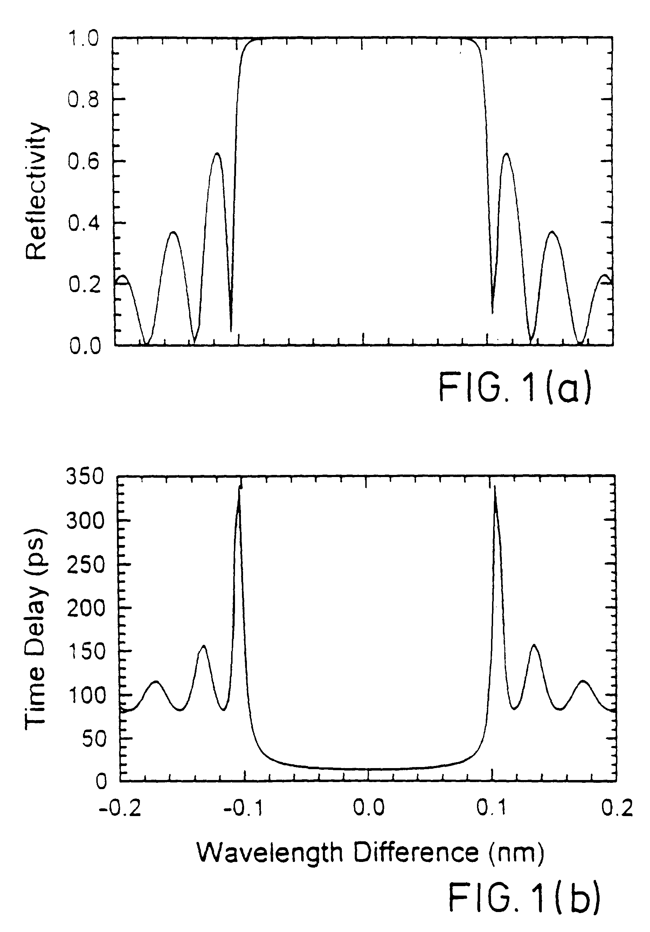

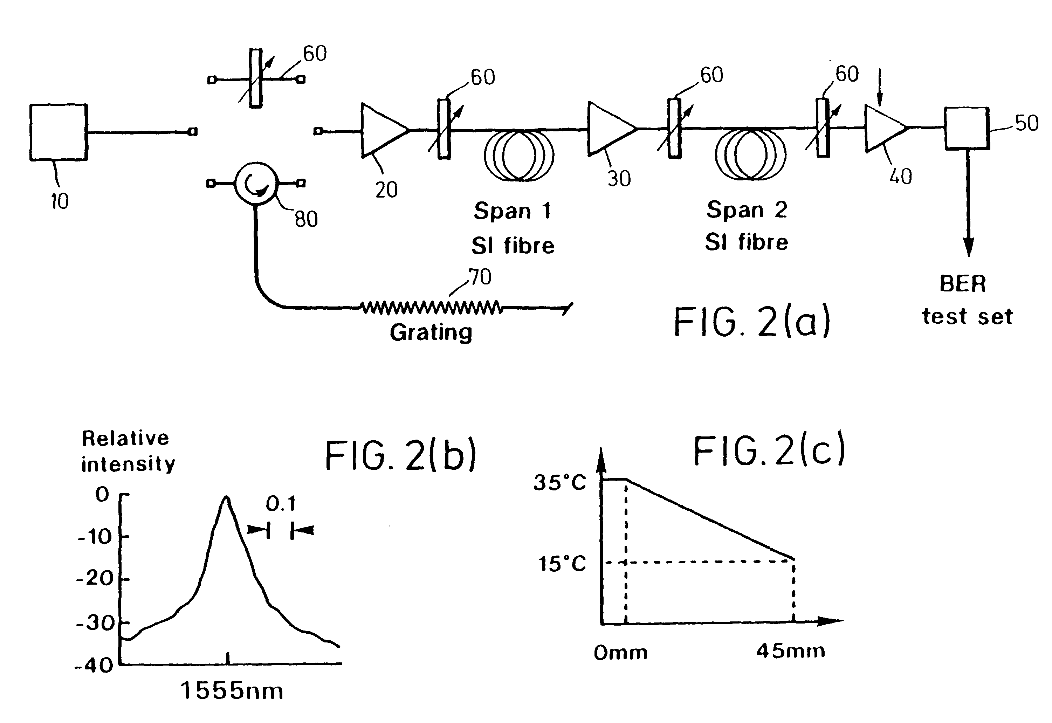

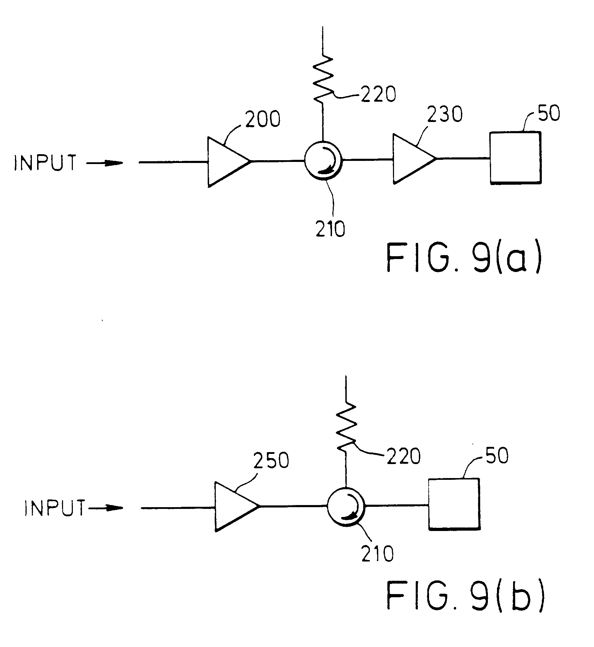

Experiments performed using a test optical link (as shown in Figure 2(a) will now be described, with reference to Figures 1 to 8. Then, two embodiments of optical pre-amplifiers (which could be incorporated into an optical link similar to that of Figure 2(a)) will be described with reference to Figures 9(a) and 9(b).

### Background Experiments

Figure 1 shows a simulation of the reflection spectrum and time delay characteristics of a linear grating of 17mm length. The grating exhibits a similar bandwidth of 0.2nm (25GHz) to that demonstrated. As can be seen from the time delay plot this type of grating exhibits large higher order dispersion (~300ps) at the edges of the reflection band which will be detrimental to system performance.

An optical communication apparatus is shown schematically in Figure 2(a) and was established such that compensation of linear dispersion for total span lengths up to 216km could be investigated.

A 10Gbit/s externally modulated transmitter 10 is employed. This exhibits negative chirp ($\alpha$=1) to maximise transmission distance over step index fibre. This was followed by power- 20, line- 30 and pre-amplifiers 40 as well as a receiver 50. Attenuators 60 were included in each section such that, when adding fibre or the dispersion compensator, power levels in the link were maintained constant to eliminate penalty variations due to amplifier noise variations. Receiver sensitivity was measured by varying the input to the commercial preamplifier with integral narrow band (Δν=50GHz) tracking Fabry-Perot ASE filter.

At all times power levels in the link ensured operation in the linear regime.

The transmitter spectrum is illustrated schematically in Figure 2(b).

Dispersion compensation of the link was provided by incorporating a chirped fibre grating 70 between the transmitter and power amplifier. Since the grating operates in reflection, an optical circulator 80 was included to convert it to a transmissive device.

The linear fibre grating was written with a frequency-doubled excimer laser and scanning interferometer in hydrogenated standard telecommunications fibre. The grating was approximately 40mm in length with flat top profile and slight apodising at the edges. The measured reflectivity was ~30%. The grating was mounted such that its centre wavelength could be mechanically tuned to match that of the transmitter whilst a linear chirp could be applied via a linear temperature gradient as indicated in Figure 2(c).

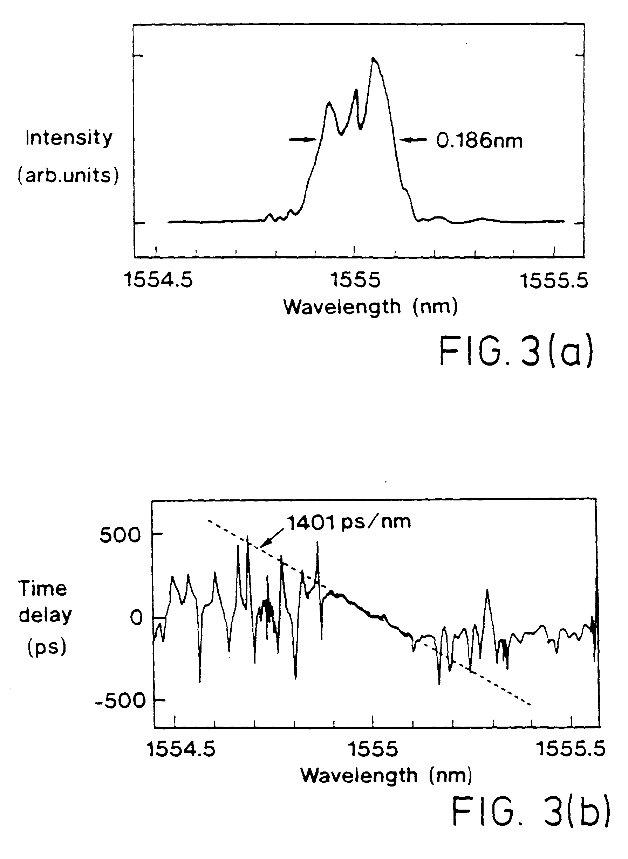

Figures 3(a) and (b) show typical reflection spectra and time delay characteristics measured using an interferometric set up (see publication reference 12 below) for a temperature differential of 15°C (15°C/45mm). A 3dB reflection bandwidth of 0.186nm is observed; however modulation in the spectra is present due to the near flat-top profile of the grating. Nevertheless, a near linear time delay against wavelength characteristic is observed across the whole reflection band, in this case. with a slope of -1401ps/nm. No polarisation sensitivity to this slope was observed.

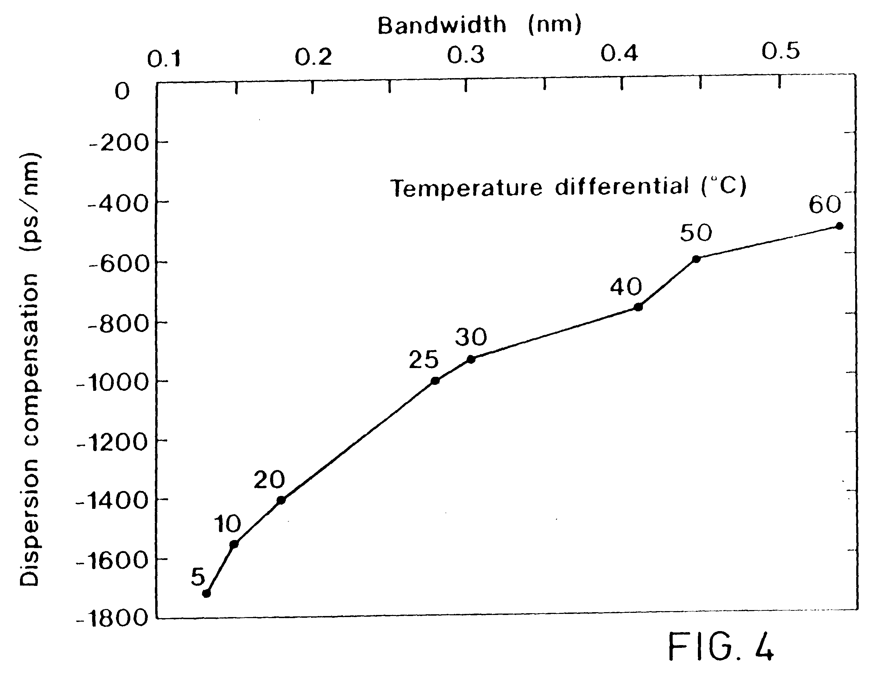

Figure 4 shows the measured bandwidth-dispersion characteristic for the grating. As anticipated, the bandwidth-dispersion product is near constant and given by the grating length. Once chirped, the grating reflectivity reduced and thus, for a typical bandwidth of 0.287nm the circulated-grating combination exhibited an insertion loss of ~ 8.5dB, but owing to its location this had negligible effect on the link power budget. The polarisation dependent loss of the grating-circulator combination was measured to be ~0.1dB.

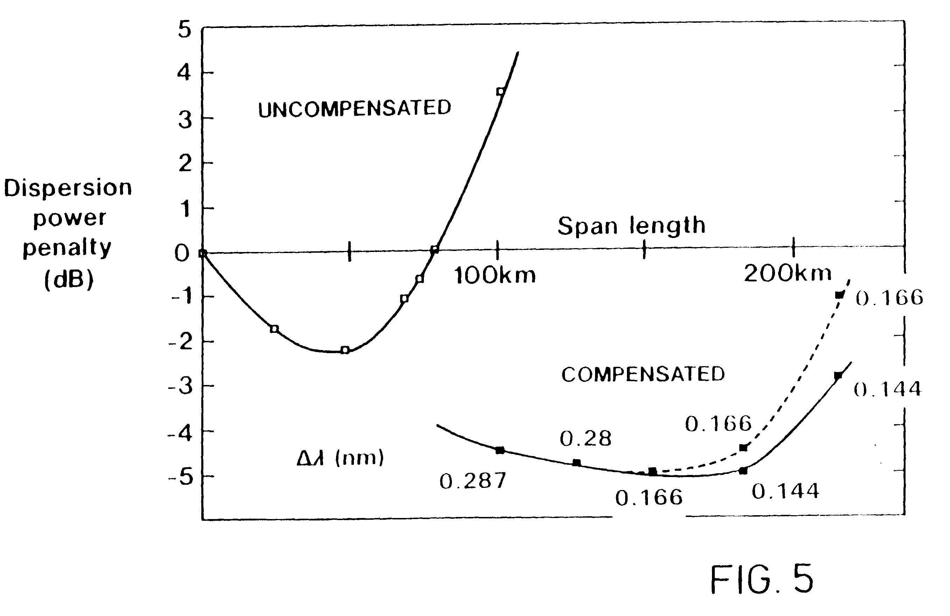

Figure 5 schematically plots the receiver penalty, compared to the back-to-back sensitivity of -27dBm and measured for a $2^{31}$-1 data pattern and a $10^{-11}$ BER, for varying span lengths. Results are compared with and without the grating. Without the grating the receiver sensitivity is observed to improve (negative penalty) for short span lengths and exhibit a minimum around 50km due to the negative-chirped transmitter. For increasing span lengths, the penalty increased sharply with 0 and 3.5 dB penalties being observed for 80km and 102.6km spans, respectively.

In the case of the dispersion compensated link, by variation of the grating dispersion and hence bandwidth as indicated, a large span variation. 102.6-185.3km is observed, where a receiver improvement of 4.5-5dB is obtained.

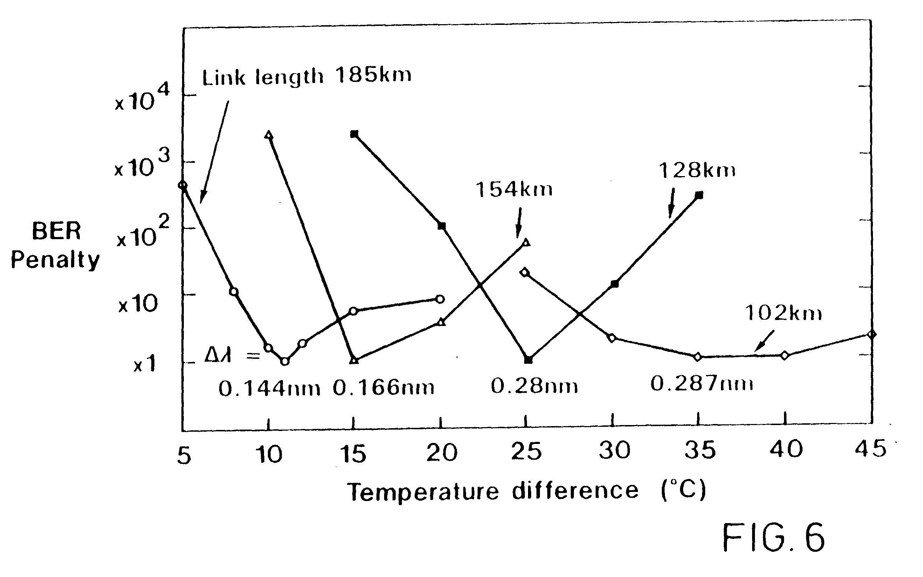

Optimisation of the grating dispersion was investigated in each case as shown in Figure 6 where the BER penalty as a function of temperature differential is plotted. From this Figure and Figure 4 it can be inferred that for a less than 10 times BER penalty the dispersion should be compensated to within ~ ±150ps/nm.

For the increased span of 215.8km a reduction in the dispersion compensation is observed. In the case of the 185.3 and 215.8km spans, the grating 3dB-bandwidth of 0.144nm corresponded to the transmitter 11.5dB-bandwidth and thus setting of the grating centre wavelength was critical.

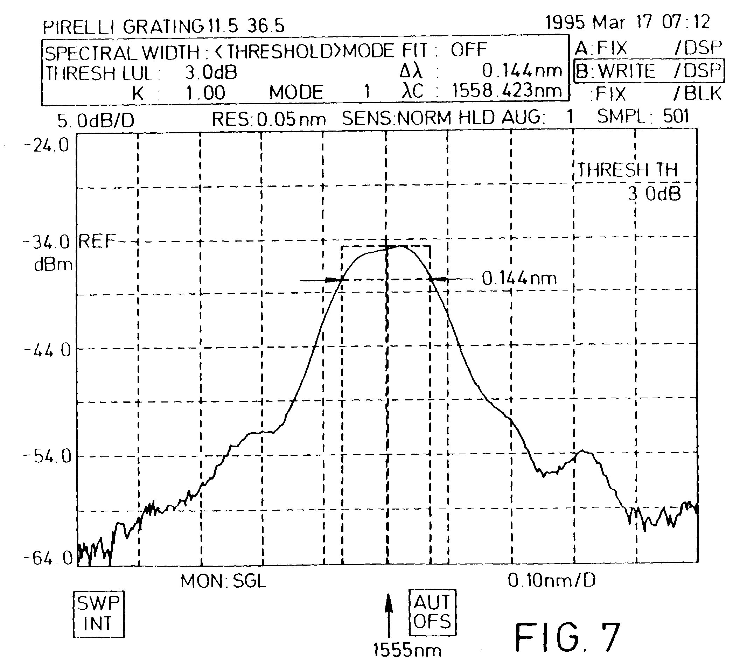

Figure 7 shows the grating-circulator combination transmission spectrum measured in this case with an ANDO AQ6315A optical spectrum analyser with 0.05nm resolution. A near flat-top response with 0.144nm (18GHz) 3dB bandwidth is observed. These results confirm that a 0.144nm (18GHz) bandwidth chirped grating filter can be used in a 10Gbit/s system with no penalty compared to larger bandwidth filters. Incorporation of such a device would filter more ASE noise than the case of the 50GHz Fabry-Perot filter and similar noise to the 20GHz Fabry-Perot filter (see publication reference 9 below) with less distortion.

This wavelength sensitivity was reduced by increasing the grating bandwidth which decreases the dispersion and thus incurs a slight penalty. In this case the 0.166nm 3dB grating bandwidth corresponded to the 14dB transmitter bandwidth.

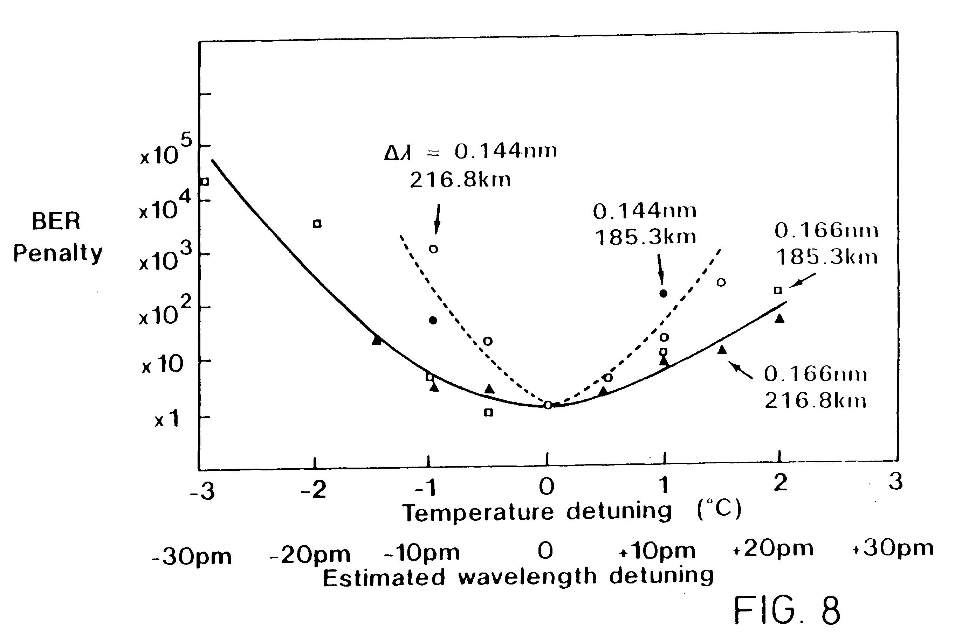

Figure 8 shows BER penalty as a function of detuning the grating centre wavelength via temperature. In the case of the 0.144nm bandwidth grating an inferred wavelength accuracy of ±0.005nm is required. Increasing the bandwidth to 0.166nm. although reducing the dispersion compensation (see Figure 5), reduced the wavelength tolerance to ±0.01nm.

These wavelength tolerances, although tight, are not unreasonable as long as wavelength tracking of the grating/ transmitter is provided. If developed such a filter could be employed in the pre-amplifier to provide noise filtering in addition to dispersion compensation. In this case the flat-top spectral response of a chirped filter may be advantageous compared to the response of Fabry-Perot type filters.

## Embodiments of the Pre-amplifier

The results described above show the effects of using a tracking chirped grating filter to provide dispersion compensation. In the embodiments to be described below, such a filter is incorporated into the receiver pre-amplifier.

**EP 0 818 088 B1**

Because of the additional benefits of noise reduction by filtering at the pre-amplifier stage, this arrangement can produce a performance which is even better than that described above.

Future optical fibre links will require dispersion compensation and noise filtering. In addition wavelength division de-multiplexing may be required. The present embodiments integrate both functions in one device, a new near-fixed bandwidth and dispersion but wavelength tracking chirped fibre grating filter. The device is incorporated at the end of the link either inbetween amplifying stages of the preamplifier as indicated in Figure 9(a) or after an amplifying stage of the preamplifier as indicated in Figure 9(b).

In particular. Figure 9(a) shows a first amplifying stage 200 coupled to an optical circulator 210. The optical circulator is coupled to the chirped grating noise filter (of the type described above with reference to Figures 1 to 8) and a second amplifying stage 230. The output of the second amplifying stage is coupled to the optical receiver 50. Figure 9(b) shows a similar arrangement, except that only a single amplifying stage 250 is used, with the output of the circulator 210 being coupled directly to the receiver 50. In both embodiments of Figures 9(a) and 9(b) there is no need for a Fabry-Perot or interference filter at the pre-amplifier, so these are not provided.

The grating is manufactured to have near fixed dispersion and bandwidth but centre wavelength tunability (to match the centre wavelength of the optical transmitter). In these experiments the dispersion and bandwidth were set by the temperature gradient and grating length, whilst the centre wavelength could be tuned using known techniques such as by mechanically straining the grating or by via the temperature offset. Alternatively a permanent chirp can be set at grating manufacture using techniques such as step-chirp phase-masks (see publication reference 13 below); fibre deformation during UV exposure (see publication reference 14 below): or movement of the phase mask during exposure (see reference 17 below).

Methods such as the etched taper technique (see reference 15 below) or cantilever beam technique (see reference 6 below) are less suitable since they do not facilitate independent control of $\Delta\lambda$ and $\lambda$.

As an example of the design a 40mm grating with slight apodising as in the experiment with 0.144nm 3dB bandwidth and dispersion 1550ps/nm.km is employed in either design (Figure 9(a) or 9(b)) to compensate ~100km of SI fibre (D=17ps/nm.km) in a 10Gbit/s system.

A longer grating, ~80mm, could be employed to obtain similar dispersion but with an increased bandwidth of ~0.288nm. Alternatively such a grating could be designed to have a 0.144nm bandwidth but dispersion around 3100ps/nm.km.

The dispersion-bandwidth product is near constant and related to the grating length. The exact profile of the grating will influence this. Typically tuneable gratings to be incorporated in the preamplifier will have bandwidths in the range 0.1-2nm and dispersion in the range 100-10000ps/nm.km and thus have length in the range 5-400mm. Tuning of the grating centre wavelength can be achieved by a near uniform strain/compression. temperature increase/decrease or electric field applied along the device (see publication reference 16 below).

In summary, an investigation of the bandwidth-dispersion trade-off for a fixed (40mm) length tuneable linearly-chirped fibre grating has been described. Using such a grating in the receiver pre-amplifier can compensate the dispersion in a 10Gbit/s transmission experiment for standard step-index (SI) fibre lengths anywhere in the range 103-216km, and reduce the noise at the receiver. For the longest span and, thus, narrowest bandwidth compensator its centre wavelength is found to be important (±5ppm) but well within the tolerance of possible active stabilisation.

The chirp can give the pre-amplifier filter the desired near flat-top profile with near linear delay characteristics across the reflection band. By making the filter a tracking filter, a particularly sharp noise filtering response can be used. In this way, beneficial noise reduction can be obtained by the receiver pre-amplifier chirped grating filter preferably having the following relationship between bit rate (BR) and filter frequency 3dB bandwidth ($\Delta\nu$):

$$BR \leq \Delta\nu \leq 5BR$$

Such a pre-amplifier could be used in place of the pre-amplifier 40 in a link of the type shown in Figure 2(a), except that there would be no need for the grating 70, the circulator 80 or the compensating attenuator 60 (which was used simply to provide experimental comparisons). In other words, the transmitter 10 could simply be connected directly to the amplifier 20. Also. in a link for real (rather than experimental) use, the BER test set would of course not be required.

PUBLICATION REFERENCES

1. R. Kashyap et al, Electr. Lett., Vol. 30, No. 13, pp. 1078-1080, 1994.
2. K.O. Hill et al. Proc. OFC'94, PD2, pp.17-20.
3. J.A.R. Williams et al, Electr. Lett., Vol.30(12), 1994, pp.985-987.

5

4. UK Patent Application No 9501672.1

5. B. Malo et al. Proc. ECOC Vol. 4 (Postdeadline papers), pp.23-26, Sept.25-29, 1994.

6. D. Garthe et al. Proc. ECOC Vol. 4 (Postdeadline papers), pp.11-14. Sept.25-29, 1994,

7. P.A. Krug et al, Proc. OFC'95, Postdeadline paper PD27, February 26-March 3, 1995.

8. R.I. Laming, "Optical fibre devices: vibrometer, current monitor & amplifier", PhD thesis, University of Southampton, 1989, pg. 208.

9. R.I. Laming et al, IEEE Photonics Technology Letters, Vol. 4,pp. 1348-1350, 1992.

10. Y.E. Dallal, Proc. 3rd Topical Mtg. on Optical Amplifiers and their Applications. June 24-26, 1992, Santa Fe, pp. 127-130.

11. D.R. Huber, Proc. ECOC '92, Paper We P2.2, Vol. 1 pp. 473-476, Berlin, Sept. 27- Oct. 1 1992.

12. S. Barcelos et al, Proc. IEE Colloquium on "Optical fibre gratings and their applications", Paper 5, London, 30 January 1995 & submitted to ECOC '95.

13. R. Kashyap et al, Electr. Letts., Vol. 30, pp. 996-998, 1994.

14. K. Sugden et al, Electr. Letts., Vol. 30, pp. 440-442, 1994.

15. British patent application number 9503555.6.

16. T. Fujiwara et al, Proc. OFC '95, Postdeadline papers, PD 6, San Diego. Feb 26- March 3, 1995.

17. British patent application number 9509874.5

## Claims

1. An optical receiver pre-amplifier (200, 210, 220, 230) for amplifying optical signals which have been transmitted via a dispersive optical transmission link, **characterised by** a chirped apodised Bragg grating noise filter (220), the dispersion of the chirped apodised Bragg grating noise filter acting against the dispersion of the optical transmission link.

2. A pre-amplifier according to claim 1, in which the chirped apodised Bragg grating noise filter (220) is a wavelength-tracking grating noise filter.

3. A pre-amplifier according to claim 1 or claim 2, in which the chirped apodised Bragg grating noise filter is an optical fibre grating.

4. A pre-amplifier according to any one of claims 1 to 3, in which the frequency bandwidth ($\Delta\nu$) of the chirped apodised Bragg grating noise filter is related to the bit rate (BR) of data transmitted via the link by the formula:

$$BR \leq \Delta\nu \leq 5BR$$

5. A pre-amplifier according to any one of the preceding claims, in which the chirped apodised Bragg grating noise filter (220) is coupled to an amplifying stage of the pre-amplifier by an optical circulator (210).

6. Optical receiver apparatus comprising an optical receiver coupled to an optical pre-amplifier according to any one of the preceding claims for amplifying optical signals supplied to the optical receiver.

7. Optical communication apparatus comprising an optical signal transmitter, receiver apparatus according to claim 6 and an optical link connected between the optical signal transmitter and the receiver apparatus.

8. Optical communication apparatus according to claim 7, in which the optical link is a single mode optical fibre link.

9. Optical communication apparatus according to claim 7 or claim 8, in which the optical transmitter operates at a wavelength of about 1.55μm.

## Patentansprüche

1. Vorverstärker für optischen Empfänger (200, 210, 220, 230) zum Verstärken optischer Signale, die über eine streuende optische Übertragungsverbindung übertragen sind, **gekennzeichnet durch** ein Chirp-Apodisations-Bragg-Gitter-Rauschfilter (220), derart, dass die Dispersion des Chirp-Apodisations-Bragg-Gitter-Rauschfilters gegen die Dispersion der optischen Übertragungsverbindung wirkt.

2. Vorverstärker nach Anspruch 1, **dadurch gekennzeichnet, dass** das Chirp-Apodisations-Bragg-Gitter-Rauschfilter (220) ein Gitterrauschfilter mit Wellenlängennachführung ist.

3. Vorverstärker nach Anspruch 1 oder Anspruch 2, **dadurch gekennzeichnet, dass** das Chirp-Apodisations-Bragg-Gitter-Rauschfilter ein optisches Fasergitter ist.

4. Vorverstärker nach einem der Ansprüche 1 bis 3, **dadurch gekennzeichnet, dass** die Frequenzbandbriete ($\Delta v$) des Chirp-Apodisations-Bragg-Gitter-Rauschfilters im Zusammenhang zu der Bitrate (BR) der über die Verbindung übertragenen Daten gemäß der Formel

$$BR \leq \Delta v \leq 5BR$$

steht.

5. Vorverstärker nach einem der vorangehenden Ansprüche, **dadurch gekennzeichnet, dass** das Chirp-Apodisations-Bragg-Gitter-Rauschfilter (220) mit einer Verstärkungsstufe des Vorverstärkers durch einen optischen Zirkulator (210) verbunden ist.

6. Optisches Empfängergerät mit einem optischen Empfänger, der mit einem optischen Vorverstärker nach einem der vorangehenden Ansprüche gekoppelt ist, zum Verstärken optischer Signale, die dem optischen Empfänger zugeführt werden.

7. Optisches Kommunikationsgerät mit einem Sender für ein optisches Signal, einem Empfängergerät nach Anspruch 6 und einer optischen Verbindung, die zwischen dem Sender für das optische Signal und dem Empfängergerät angeschlossen ist.

8. Optisches Kommunikationsgerät nach Anspruch 7, **dadurch gekennzeichnet, dass** die optische Verbindung eine Einfachmodus-Lichtleitfaserverbindung ist.

9. Optisches Kommunikationsgerät nach Anspruch 7 oder Anspruch 8, **dadurch gekennzeichnet, dass** der optische Sender mit einer Wellenlänge von ungefähr 1.55 μm arbeitet.


**Revendications**

1. Préamplificateur récepteur optique (200, 210, 220, 230) servant à amplifier des signaux optiques qui ont été transmis via une liaison de transmission optique dispersive, **caractérisé par** un filtre antiparasite (220) à réseau de Bragg apodisé et à pas variable, 1a dispersion du filtre antiparasite à réseau de Bragg apodisé et à pas variable agissant contre la dispersion de la liaison de transmission optique.

2. Préamplificateur selon la revendication 1, dans lequel le filtre antiparasite (220) à réseau de Bragg apodisé et à pas variable est un filtre antiparasite à réseau à poursuite de longueur d'onde.

3. Préamplificateur selon la revendication 1 ou 2, dans lequel le filtre antiparasite à réseau de Bragg apodisé et à pas variable est un réseau à fibre optique.

4. Préamplificateur selon l'une quelconque des revendications 1 à 3, dans lequel la largeur de bande ($\Delta v$) du filtre antiparasite à réseau de Bragg apodisé et à pas variable est liée au débit binaire (BR) des données transmises via la liaison par la formule :

$$BR \leq \Delta v \leq 5BR$$

5. Préamplificateur selon l'une quelconque des revendications précédentes, dans lequel le filtre antiparasite (220) à réseau de Bragg apodisé et à pas variable est couplé à un étage amplificateur du préamplificateur au moyen d'un circulateur (210).

6. Appareil récepteur optique comprenant un récepteur optique couplé à un préamplificateur optique selon l'une quelconque des revendications précédentes pour amplifier des signaux optiques fournis au récepteur optique.

7. Appareil de communication optique comprenant un émetteur de signaux optiques, un appareil récepteur selon la revendication 6 et une liaison optique connectée entre l'émetteur de signaux optiques et l'appareil récepteur.

8. Appareil de communication optique selon la revendication 7, dans lequel la liaison optique est une liaison à fibre optique mono-mode.

9. Appareil de communication optique selon la revendication 7 ou 8, dans lequel l'émetteur optique fonctionne à une longueur d'onde d'environ 1,55 $\mu$m.

FIG. 1(a)

Wavelength Difference (nm)

FIG. 1(b)

60

60

60

60

10

20

Span 1
SI fibre

30

Span 2
SI fibre

40

50

80

70

Grating

FIG. 2(a)

BER
test set

FIG. 2(b)

Relative
intensity

0

-10

-20

-30

-40

0.1

1555nm

FIG. 2(c)

35°C

15°C

0mm

45mm

EP 0 818 088 B1

Intensity (arb.units)

0.186nm

Wavelength (nm)

FIG. 3(a)

Time delay (ps)

1401 ps/nm

500

0

-500

1554.5     1555     1555.5

Wavelength (nm)

FIG. 3(b)

FIG. 4

FIG. 5

FIG. 6

EP 0 818 088 B1

PIRELLI GRATING 11.5 36.5              1995 Mar 17 07:12

SPECTRAL WIDTH : < THRESHOLD>MODE FIT : OFF      A:FIX      /DSP
THRESH LUL: 3.0dB               Δλ :    0.144nm    B:WRITE  /DSP
      K : 1.00     MODE   1   λC : 1558.423nm    :FIX    /BLK

5.0dB/D       RES:0.05nm   SENS:NORM HLD AUG:  1   SMPL: 501

THRESH TH
3.0dB

0.144nm

MON: SGL                                0.10nm/D

SWP INT                      AUT OFS

1555nm                FIG. 7

EP 0 818 088 B1

FIG. 8

FIG. 9(a)

FIG. 9(b)